# EUROPEAN PATENT SPECIFICATION

(11) **EP 4 239 573 B1**
(45) Date of publication and mention of the grant of the patent: **22.07.2026**
(21) Application number: 21884190.6
(22) Date of filing: 29.10.2021
(51) Int. Cl.: G06V 10/25, G06V 10/82, G06V 40/16

(54) **METHOD FOR DETECTING AND SEGMENTING THE LIP REGION**
VERFAHREN ZUR DETEKTION UND SEGMENTIERUNG DES LIPPENBEREICHS
PROCÉDÉ DE DÉTECTION ET DE SEGMENTATION DE LA RÉGION LABIALE

(30) Priority: 29.10.2020 BR 102020022162
(43) Date of publication of application: 06.09.2023
(73) Proprietor: Botica Comercial Farmacêutica Ltda, 83055-900 São José dos Pinhais (BR)
(72) Inventor: PADILHA, Milene Haraguchi, 80330-000 Curitiba (BR); URIO, Camila Andréia Bernardon, Alphaville Graciosa São José dos Pinhais (BR); SASSON, Clarice Scliar, Curitiba (BR); DIEAMANT, Gustavo De Campos, Curitiba (BR)
(74) Representative: Winter, Brandl - Partnerschaft mbB
(86) International application number: PCT/BR2021/050478
(87) International publication number: WO 2022/087706

(56) References cited:
- CN-A- 107 610 201
- CN-A- 108 537 722
- US-A1- 2019 122 404
- US-A1- 2019 289 986
- US-B1- 10 713 794
- DU NINA: "Learning Lipstick Colors and Brands from Images (Computer Vision)", CS230N REPORTS, 30 June 2020 (2020-06-30), XP055794016, Retrieved from the Internet <URL:https://cs230.stanford.edu/projects_spring_2020/reports/38916954.pdf> [retrieved on 20210409]
- AHMAD SOHAIB; FULLER BENJAMIN: "Unconstrained iris segmentation using convolutional neural networks", ASIAN CONFERENCE ON COMPUTER VISION, vol. 11367, 2018, pages 450 - 466, XP047510956, Retrieved from the Internet <URL:https://arxiv.org/pdf/1812.08245.pdf> [retrieved on 20220222]
- RONNEBERGER OLAF; FISCHER PHILIPP; BROX THOMAS: "Medicai Image Computing and Computer-Assisted Intervention - MICCAI", vol. 9351, 2015, SPRINGER, article "U-Net: Convolutional Networks for Biomedi cal Image Segmentation", pages: 234 - 241, XP047331005
- HE KAIMING, GKIOXARI GEORGIA, DOLLAR PIOTR, GIRSHICK ROSS: "Maskr-cnn", PROCEEDINGS OF THE IEEE INTERNATIONAL CONFERENCE ON COMPUTER VISION, 2017, pages 2961 - 2969, XP033283165, Retrieved from the Internet <URL:https://openaeeess.thecvf.eom/eontent_ICCV_2017/papers/He_MaskR.-CNNICCV2017paper.pdf> [retrieved on 20220222]
- ACHANTA, R. ET AL.: "SLIC Superpixels Compared to State-of-the-Art Superpixel Methods", IEEE TRANSACTIONS ON PATTERN ANALYSIS AND MACHINE INTELLIGENCE, vol. 34, no. 11, November 2012 (2012-11-01), pages 2274 - 2282, XP011490750, Retrieved from the Internet <URL:https://ieeexplore.ieee.org/document/6205760> [retrieved on 20220222], DOI: 10.1109/TPAMI.2012.120

## Description

The present patent of invention pertains to the technical field of methods or arrangements for reading and identifying patterns. More specifically, it refers to the technology for using algorithms of deep learning, machine learning and artificial intelligence to identify the outline of lips and also to methods that enable the detection and segmentation of the lip region.

### STATE OF THE ART

The study of the state of the art is highly important for the result proposed by the present invention, since no solution was found that would satisfy the requirements to provide a process of detecting and recognizing precise lip images by using artificial intelligence, viewing the use by an intelligent application system of lip products in the lips with precision.

In this sense, a survey of the directly or indirectly-related technologies is carried out, with the problems linked to the objective of the present invention, such as: segmentation of the lips, recognition of edges and textures, application of pigments, and others. An analysis is also performed of the devices existing on the market and that are related to some part of the process of applying beauty products.

Various documents from the state of the art mention the use of deep learning, machine learning and artificial intelligence, viewing facial identification by means of processes of detecting and recognizing previously captured images, or, also, images in real time.
CN 108 537 722 A describes an image processing method to achieve the virtual makeup effect of a lip.
CN 107 610 201 A discloses a lip processing method and apparatus based on image processing. Du Nina describes in "Learning Lipstick Colors and Brands from Images (Computer Vision)" CS230N reports, 30 June 2020 (2020-06-30)) an image segmentation model for identifying lips and then a lipstick classification model using CNN.
US 2019/289986 A discloses methods for virtual facial makeup removal.
US 2019/122404 A describes a method of augmenting image data.

BR102012033722-3 discloses a system and method capable of creating virtual makeup in images obtained by portable devices equipped with digital cameras. According to the patent application, the method enables the automatic identification of points of interest (eyes, mouth, eyebrow, face contour) in the image. EP2985732B1 discloses image processing again with the purpose of reproducing virtual makeup. Moreover US10339685B2 discloses a system and a method capable of digitally removing facial makeup. All these documents show application of facial recognition technologies that consider the face as a whole. These methodologies correlate various points of the face, such as eyes, eyebrows, nose and mouth, so as to facilitate recognition of each one of these regions.

US9552510B2 discloses techniques for capturing facial expressions for cartoons by means of artificial intelligence. However, once again, it correlates key points of the face as a whole to obtain certain facial recognition.

Another application of artificial intelligence technology in the technical field of cosmetics is related to providing recommendations for customized products, as demonstrated in WO2017/165363A1. Said document discloses recognizing the age of the skin by means of images captured by devices. After analysis by computer devices, the age of the skin is determined and specific formulations are suggested for each user.

As for methods of recognition, evaluation and categorization of lips, without applying artificial intelligence technology, documents such as WO2006043643A1 and WO2008135907A1 may be cited.

Although not pertaining to the field of application of cosmetics "LipNet: End-to-end sentence-level Lipreading" discloses the use of artificial intelligence, by means of networks, for high-precision lip reading. Although the application is focused on lips, it is directly related to their sequential movements, and to the context of vocabulary and sentences, which are part of the learning process of reading.

Other sundry non-patent literary documents are known in the state of the art, their objective being the detection and segmentation of lips in color images.

The methodology described by Eveno, N. *et al* (Eveno, N., Caplier, A., & Coulon, P. Y. (2002, August). Key points based segmentation of lips. In Proceedings. IEEE International Conference on Multimedia and Expo (Vol. 2, pages 125-128). IEEE) is based on detecting lip Key Points, which signal points or features representative of a region in an image, in order to estimate the outer contour of the lips. This approach employs digital processing techniques of images in the RGB color space, and the analysis of the luminous brightness on the lip, to identify upper and lower lip, since the illumination falls on the upper lip differently to the lower lip. In this document, the lip contours are defined by tracking the coloring around each pixel in the image. The contours found are considered as polynomial curves, wherein peaks and valleys define the regions of the cupid's bow (structure of the lip anatomy located in the center of the upper lip, being a V-shaped depression located just above the vermilion border) and the ends of the commissures (name given to the edge joints of slit-shaped openings on the body (eyelids, lips etc.)). The tests are carried out with images of the lip region, with people talking under natural and non-uniform lighting. The algorithm developed proved to be robust in cases where the individual wears a beard, and when the teeth and tongue were exposed. In contrast, the problems for this approach are related to the rotation of the individual's face, causing the visibility and the definition of the lip features to be lost when there is a change of angle of the face, and the definition of solely the outer - not inner - edges of the lips.

The document Hassanat, A. B. *et al* (Hassanat, A. B. & Jassim, S. (2010, April). Color-based lip localization method. In Mobile Multimedia/Image Processing, Security, and Applications 2010 (Vol. 7708, page 77080Y). International Society for Optics and Photonics) performs an analysis of the color intensity frequency present in the lips and of the face in order to identify the regions of interest. The approach of differentiating between the skin of the lips and the face is based on the analysis of the color intensity frequency in the color spaces: RGB, HSV and YCbCr. For a more precise approximation of the lip region, a clusterization algorithm is applied (grouping by pre-defined similar features - technique of grouping correlated data given an n-dimensional space) by color intensity pixels and neighborhood. This document shows an application in videos for volunteers from different ethnic groups (Africans, Asians, Europeans, people from the Middle East), of the female and male gender, and volunteers with a beard and/or moustache. The challenge of the model proposed by Hassanat, A. B. *et al* lies in the use of color spaces for lip segmentation, since the brightness intensity is crucial so that the lip color features are recognized by the method proposed. The method achieves an average accuracy of 91.15% relative to the location of the lip region. On the other hand, the worst results for this approach relate to the analysis of images in the RGB color space. The algorithm is found to be robust when there is lip detection in individuals of the female gender, since individuals of the male gender have hair in the facial region, a fact that ultimately confounds the algorithm.

In Skodras, E. *et al* (Skodras, E., & Fakotakis, N. (2011, May). An unconstrained method for lip detection in color images. In 2011 IEEE International Conference on Acoustics, Speech and Signal Processing (ICASSP) (pages 1013-1016). IEEE), the methodology used is based on segmentation by color, based on the image of the face, to obtain the best region that represents the separation between lips and facial skin. The region is based on the difference in color between lips and skin and this separation is independent from the particular intensities of the partition pixels. For this purpose, the color space used is the L*a*b* and the combined techniques of color segmentation using Nearest Neighbor (analysis of neighborhood through the proximity of the data in an n-dimensional space) and Clusterization based on colors using K-Means (clusterization algorithm that groups correlated data according to a given neighborhood radius) are applied. Subsequently, a mathematical processing is applied, an ellipse is adjusted in the best way to the lips detected and so the points of interest (Key Points) relating to the lips are extracted. The tests presented by Skodras, E. *et al* are performed with images from bases used under diverse lighting conditions and no type of makeup is used by the people appearing in the images. Additionally, low-lighting images are also used, which hampers segmentation by colors. The method is robust even in challenging cases, such as situations where the light is not uniform, presence of a beard, low color contrast between the labial and non-labial area or whether the teeth are visible. Nor is it affected by the slant and rotation of the head, provided that the lip region is visible. Moreover, the approach by Skodras, E. *et al* fails to extract precise results in the cases wherein the corners of the mouth were covered by parts of the beard.

The document Le, T. H. N *et al* (Le, T. H. N., & Savvides, M. (2016). A novel shape constrained feature-based active contour model for lips/mouth segmentation in the wild. Pattern Recognition, 54, 23-33) uses the automatic approach of detecting and segmenting lips/mouth without restriction of conditions of the environment and robust to the position of the face and occlusion. Firstly, a prediction is made of Key Points representing the most important points of the lips. These Key Points are used subsequently to segment the object of interest: the lips/mouth. To predict the Key Points a model based on the technique Active Shape Model is used. After this, the proposed model is the SC-FAC (Shape Constrained Feature-based Active Contour) which segments the lips/mouth based on the predicted Key Points. The tests in Le, T. H. N *et al* are carried out with images from diverse bases, and the images used are under different lighting conditions, low contrast, people with facial expressions, low resolution, blurred and wearing makeup. The method proposed is robust to the conditions tested, showing good results.

Differently to the previous approaches used that were based on extracting the Key Points to subsequently perform segmentation, the work presented in Dong, W *et al* (Dong, W., He, R., & Zhang, S. (2016, October). Digital recognition from lip texture analysis. In 2016 IEEE International Conference on Digital Signal Processing (DSP) (pages 477-481). IEEE) proposes a lip recognition approach through the texture using Deep Learning. The architecture proposed is made up of networks of the Convolutional Neural Network (CNN) type (a kind of artificial neutral network used in pattern recognition) and Long Short-Term Memory (LSTM) for digital recognition, which are among the advantages of CNN and LSTM. The CNN was used with the objective of learning advanced image resources for the appearance of the lips and LSTM to learn the space-time variation between frames (each one of the images which, when placed in sequence, give rise to the video). Moreover, the method proposed does not show robustness to the variation in lighting.

In turn, the objective of the work proposed by Bindal, U *et al* (Bindal, U., Shajan, K., Mitra, N. K., & Priydarshni, B. (2015). Morphological Analysis of Vermilion Border and its Forensic Applications. J Dentistry Oral Medicine, 3 (1), 21-28) is to find the most common features present in the lips regarding sexual variations, to the morphology of the lips and their anthropometric measurements. Three hundred (300) individuals aged between 18 and 65 years old participated in the experiments carried out in Bindal, U. *et al.* Impressions of the edge of the lips were obtained and the morphometric analysis of the impressions obtained were made using a ruler. The height and width of the mouth were measured and the wrinkles and grooves in the impressions obtained were studied with the help of a magnifying glass. The impressions of an individual were repeated every year for seven years. By experimenting, it was found that the width of the mouth and the thickness of the lips in men, generally speaking, are larger than in women. It was also found that morphologically average lips are present in both genders and changes in the anthropometric measurements were not noted in the seven years of subsequent studies.

The main focus of the document presented in Liu, Y. *et al* (Liu, Y., Li, Y., Ma, X., & Song, R. (2017). Facial expression recognition with fusion features extracted from salient facial areas. Sensors, 17 (4), 712) was the recognition of facial expressions. The approach proposed consists of an algorithm that uses the fusion of features extracted from salient areas of the faces. To extract more representative features, first the salient areas of the faces of the image are defined and these areas are used to extract features in other images of faces of a similar size. Therefore, it is possible to extract more similar features from different individuals. The features originating from segmentation techniques by texture in an image (Local Binary Pattern - LBP) and object detection feature descriptors (Histogram of Oriented Gradient - HOG) are extracted from the salient areas, the extent of the fusions of features is reduced by the Principal Component Analysis (PCA) (mathematical procedure that converts a set of correlated variables into linearly non-correlated, called Principal Components) and various classifiers are applied (Patter Recognition models) to classify the six basic expressions (joy, fear, surprise, sadness, disgust, anger) all at once. As a result, the salient areas found in different individuals are the same size. Additionally, the correction of the lighting of the image is applied firstly to the LBP resources in the structure of algorithms with a view to improving the recognition rates. Various image bases are used in the experiments carried out in Liu, Y. *et al.* Although the method proposed in Liu, Y. *et al* has achieved the state of the art in terms of recognition of facial expressions, there are two points in which the approach does not perform well. The first point concerns the size of the image base used. If the image base is not large enough, the method of correcting the brightness used will not manage to improve recognition of the expressions. The second point concerns the use of Landmarks (important points of interest of the objects in the image used as a reference by the pattern recognition model), which are points that represent the principal features present in the face. If these points are not precise, recognition of the facial expressions will not be either.

The work proposed by He, K. *et al* (He, K., Gkioxari, G., Dollár, P., & Girshick, R. (2017). R-CNN Mask. In Proceedings of the IEEE international conference on computer vision (pages 2961-2969)) propose an architecture called R-CNN Mask that performs the segmentation process, addressed in other articles already cited, however, based on Deep Learning. The R-CNN Mask is a method of segmenting objects based on R-CNN Faster (consisting of an architecture of Deep Learning for detecting objects), which initially needs to detect the objects present in the image so as to then segment said objects. So at a first moment the architecture of the R-CNN Faster network is used to detect objects and after this with the information of detection, in parallel, the objects are segmented by creating masks. The approach proposed in He, K. *et al* surpasses the preceding works from the state of the art and manages to provide good results albeit under challenging conditions.

Differently to the works already cited, the work by Kobayashi, H. *et al* (Kobayashi, H., & Tagami, H. (2004). Functional properties of the surface of the vermilion border of the lips are distinct from those of the facial skin. British Journal of Dermatology, 150 (3), 563-567) proposes to present the differences between the skin of the lip and of the face through the functional properties. The study by Kobayashi, H. used a system of cameras for measuring the transepidermal water loss (TEWL) of the lip. Based on this, a study was carried out on the biophysical properties of the lip, comparing them with those of the cheek skin. The TEWL tests (high-frequency conductance) are carried out with 303 healthy volunteers for the lip region and cheek region. The data obtained show that the lip has three times more water loss capacity relative to the cheek region. Despite presenting data differentiation obtained by TEWL, the experimental environment is controlled in conditions of humidity (50%) and temperature (21°C).

As demonstrated, it can be seen that artificial intelligence technology is being applied on various fronts related to facial recognition.

When applied specifically to the lips, it is understood that most of the techniques draw references to other points of the face to enable identification of the lips. When focused solely on the mouth, points of reference (key points) are still needed, even teeth or beards for example, so that lip identification becomes more assertive. Besides the key points and, accordingly, the need to visualize the full mouth, there are still other limiting factors, such as lighting and angle of the lips.

Additionally, the edge of the lip is not a well-defined border and, besides having a non-linear variation of tone, it may have assymetries in the outline. The techniques for lip recognition identified in the state of the art show problems related to precision in identifying the edge that defines the limit of the lips.

As noted, various documents were located that refer to the technical field of the present invention, yet not focusing on improving the image processing steps necessary to distinguish with the utmost precision the limits between the areas of the facial and labial dermis so as to enable the application of technology in hardware relating to an intelligent system of applying lip products to the lips.

The main objective of the present invention is the use of Artificial Intelligence methods that enable the identification and segmentation of the lips in an accurate manner, so that lip products can be automatically applied without the use of accessories, such as mirrors.

### BRIEF DESCRIPTION OF THE DRAWINGS

The following description is not limited to the drawings or components cited, the reference being the following illustrations listed below.
Figure 1 shows an image representing the identification of the various regions of a lip contour.
Figure 2 shows a graph of the frequencies captured by the cones in the human eye.
Figure 3 shows a graph with the representation of the RGB color space.
Figure 4 shows a graph comparing the three color spaces (Lab, RGB and CMYK).
Figure 5 shows an image representing the Lab color space.
Figure 6 shows an image representing the HSV color space.
Figure 7 shows a spatial comparison image of the color spaces YCbCr and the RGB space.
Figure 8 shows a detection of objects/elements in the image and their respective bounding boxes in red, green and blue.
Figure 9 shows a recognition of objects/elements in the image and their respective labels.
Figure 10 shows a segmentation of objects/elements in the image and their respective masks in red, green and blue.
Figure 11 shows a diagram of the training process in machine learning.
Figure 12 shows a diagram of the training process in deep learning.
Figures 13A, 13B and 13C show examples of images acquired using Leap Motion infrared camera.
Figure 14 shows high resolution images obtained by a webcam modified to have the lowest possible focus setting capable of capturing images in full HD.
Figures 15A, 15B, 15C and 15D show the use of microscopy images.
Figure 16 shows high definition images of the curves and outline of the lips in applying the lipstick pigment proposed by the present invention.
Figure 17 shows examples of SCface - Surveillance Cameras Face Database dataset images comprising face images captured by different cameras, one RGB and the other infrared.
Figures 18A and 18B show prediction results U-Net contours.
Figure 19 shows a diagram of the training and testing process of the U-Net network used for segmenting the mouth.
Figure 20 shows results of the U-Net network for predicting the contours of the mouth.
Figure 21 shows an image used by an image-labeling tool for training.
Figure 22 shows a diagram of the training and testing process applied to the U-Net network with variations of the prediction mask.
Figure 23 shows examples of results for the different masks using the U-Net network.
Figure 24 shows examples of results of the U-Net network with the thicker lip contour mask.
Figures 25A and 25B represent the detection of objects and the segmentation of the same objects with the respective masks.
Figures 26A to 26F show examples of how the image base is done for training using just parts of the lips.
Figure 27 shows an execution flow diagram of the training and testing in segmenting the lip region in a first scenario according to the present invention.
Figure 28 shows an execution flow diagram of the training and testing in segmenting the lip region in a second scenario according to the present invention.
Figure 29 shows an execution flow diagram of the training and testing in segmenting the lip region in a third scenario according to the present invention.
Figure 30 shows images of satisfactory results from the process of segmenting the lips according to the first scenario.
Figure 31 shows images of satisfactory results from the process of segmenting the lips according to the second scenario.
Figure 32 shows images of satisfactory results from the process of segmenting the lips according to the third scenario.
Figure 33 shows images of unsatisfactory results from the process of segmenting the lips according to the third scenario.
Figure 34 illustrates a color space of a digital image (RGB) and the grouping carried out.
Figures 35A and 35B show images resulting from the application of the superpixel method on a digital image and the one resulting from clusterization by color.
Figures 36A to 36E show superpixel zoning images applied on the lip edge without pigment.
Figures 37A to 37E show superpixel zoning images applied on the lip edge with pigment.
Figures 38A to 38E show superpixel zoning images applied on the lip edge without pigment.
Figures 39A to 39C show superpixel zoning images applied on the lip edge without pigment in the HSV space.
Figures 40A to 40C show superpixel zoning images applied on the lip edge without pigment in the HSV space and in RGB.
Figure 41 shows an execution flow diagram of the junction of the superpixel edges and R-CNN Mask.
Figure 42 shows images of satisfactory results from the process of segmenting the lips according to the execution of the junction of the superpixel edges and R-CNN Mask in a first scenario.
Figure 43 shows images of satisfactory results from the process of segmenting the lips according to the execution of the junction of the superpixel edges and R-CNN Mask in a second scenario.

### DETAILED DESCRIPTION

The present invention refers to a method of establishing labial information by means of a processing module capable of determining and supporting a lip product application system on the lips with precision, more specifically it shows a method of outlining the lips with steps that enable detection and segmentation of the lip region.

At the outset, it is necessary to identify the lips and separate them from the rest of the facial skin. Since this process is intended for subsequent application of lip products in the lips with precision, it is necessary to have information on the shape and contours of the mouth, this being one of the determinant factors for the precise application of lipstick.

The main motivation that provides the process of establishing labial information of the present invention refers to the application of technology in hardware relative to an intelligent system of applying lip products in the lips with precision by means of processing steps required for distinguishing with precision the limit between the facial and labial dermis areas.

Based on the analysis of concepts and definitions for assuring the feasibility of a process of establishing labial information that manages to satisfy the challenge of applying lip products by means of an intelligent system of applying lip products in the lips with precision, some definitions and concepts are previously established herein.

There are three anatomical areas recognized in the lips, as reported in the introduction to the article by Bindal, U. *et al* (Bindal, U., Shajan, K., Mitra, N. K., & Priydarshni, B. (2015). Morphological Analysis of Vermilion Border and its Forensic Applications. J Dentistry Oral Medicine, 3 (1), 21-28): outer skin, free side (red area, outside the mouth, which is considered semi-mucous) and inner side (oral mucous). The lip edge proves to be the border of the epidermis that separates the outer skin, highly keratinized, of the free side which is less keratinized, while the lips prove to be the free side.

The facial skin is thicker (sixteen cell layers) than the skin of the lips (three to five cell layers) which are composed entirely of soft tissues and so have the blood vessels nearer the surface. Moreover, since the skin of the lips does not possess hair follicles and sweat and sebaceous glands, it does not have the usual protection layer of bodily sweat and oils that keep the skin smooth, inhibit pathogens and regulate heat. This is why the lips dry quicker and crack more.

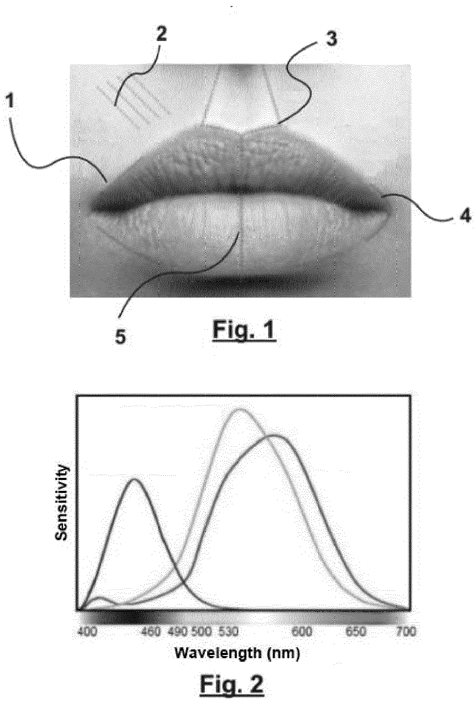

Further in relation to the lip region, Figure 1 illustrates the designation of the various parts of an image related to the definition of the lip contour (1), such as perioral lines (2), filter and cupid's bow (3), lip commissure (4) and proportion/balance (5).

Usual lip recognition techniques have problems related to the precision to identify the edge that defines the limit of the lips, consequently they lack a better definition of the area for applying the pigment of a lip product. The lip edge is not a well-defined border and besides having a non-linear variation in tone, it has assymetries in the outline. So there is a need to understand how lip product users define this edge.

Normally, users tend to use pigmentation products on the lips following the outline of the lip edge. Oftentimes this application tends to subtly overstep the lip edge at certain points. Yet this does not compromise the quality of the pigment application. On the contrary, it seems to be necessary in order to create a more symmetrical and perfect appearance of the lips.

One class of lip products - lipsticks - can be used to achieve the effect of enlarging the lips. Based on the idea of applying the product beyond the edge of the lips, pigmenting part of the near skin. The definition as to where this new lip edge will be depends on aesthetic choices for outlining a well-delineated mouth.

Regarding the identification of color spaces, colors that are visible by the human sight system are known to be inside a light spectrum, where a variation of color is noted when the light frequency varies. In turn, the human eye is composed of various structures that enable people to focus, alter the light brightness and identify these visible light frequencies. And the process of capturing this light is done by cells called cones, since the capture of brightness (light or dark) is done by cells called rods. The human eye is comprised, for the most part, of three types of cones, the low frequency cones that are more sensitive to light blue frequencies, average frequency that are more sensitive to light green frequencies and the high frequency cones that are more sensitive to light red frequencies. The fact that one type of cone is more sensitive to one frequency than to others, does not mean that it cannot capture these other frequencies, so there is an intersection in the frequencies captured, which enables the human eye, in general, to note all the visible light spectrum. This intersection can be noted in Figure 2.

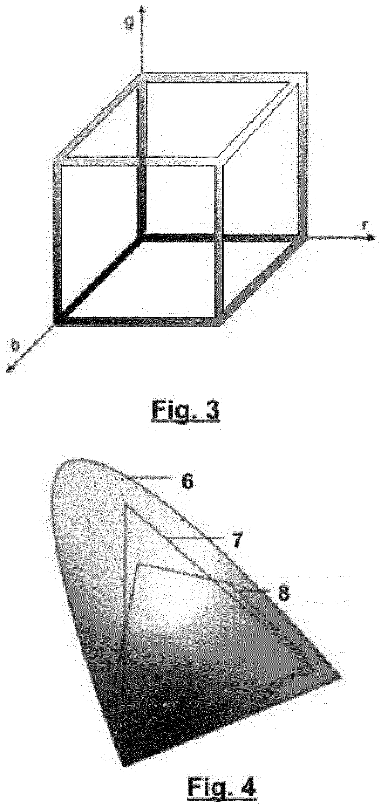

Considering these visible frequencies, various mathematical models have been developed over time to represent this variation in colors, these models in image processing are called color spaces. The most known and most used color space is the RGB. This space is represented by a cube where the colors vary in the axes, the point of origin (0,0,0) being the representation of the color black and its extreme opposite the end point (255,255,255) the representation of the color white, each axis representing the colors R - red, G - green and B - blue, as illustrated in Figure 3.

This space is very widely used in image capture and reproduction of images such as: photographic cameras, monitors, television sets, projectors, and others. Although this model represents a large quantity of colors and intensities, the same is unable to represent all the colors visible to the human eye, nor does it allow for a more subtle control of information such as brightness, saturation and transparency, as can be seen in the comparison between the Lab color space (6), the RGB color space (7) and the CMYK color space (8) presented in Figure 4.

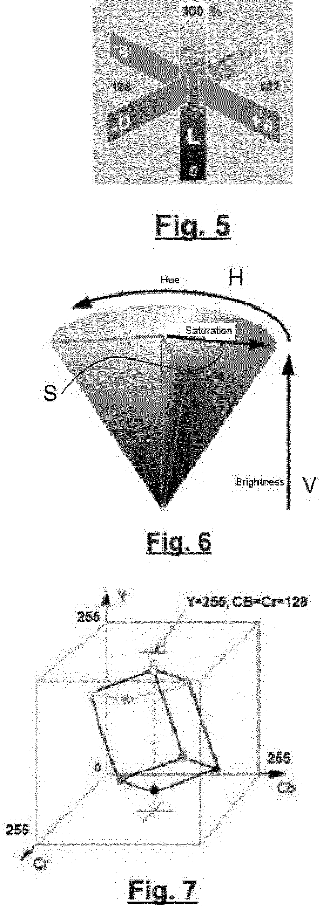

The Lab or CieLab color space is considered the closest color space to the quantity of visible colors, both in quantity of colors and in luminous brightness. This color space consists of three axes, just as in the RGB, however instead of having a start point (0,0,0) this space has coordinates that vary inside a spectrum, the L for luminance normally varying from 0 to 100 or from black to white, the A and the B varying from -128 to +128 which respectively means that they vary from green to red and from blue to yellow, as shown in Figure 5. The major advantage of this space relative to the RGB, besides the possibility of having a greater quantity of colors represented is the possibility of working with the luminance channel (L) separately, and so be able to modify some features of the image without changing the color information of the image.

Another color space highly used in image processing is HSV - Hue, Saturation, Value. This color space is represented in the space as a cylinder, as seen in Figure 6, where saturation (S) is the beam, value (V) is the height and the color spectrum (H) is the perimeter, so white is represented by the central part of the top of the cylinder, while black is represented by the base of the cylinder. This color space is broadly used in applications involving operations with human skin, as it enables easy identification of subtle differences in tones, besides separating the color information from the others and just as the Lab color space enables operations to be carried out on the channels without loss of color information.

Lastly, another color space used throughout this project is the color space YCbCr where Y is luminance, while Cb and Cr are respectively blue-difference and red-difference. The representation of this color space is a cube, just like the RGB color space, and can be considered an extension of the RGB color space, yet this color space contains a much greater range of colors than the color range of the RGB color space, and by having a separation of channels, where Y is luminance, it enables a different quantity of operations. Figure 7 shows a spatial comparison between the color spaces YCbCr (outer cube) and the RGB (inner cube).

The importance of processing the images in different spaces is directly related to the different mathematical operations that each space allows. Therefore, one information that in another color space is mixed with other information, in another space this information is independent, enabling specific adjustments and calibrations.

With regards detection, segmentation and recognition of objects in digital images, the computer vision is the field of computing that studies ways of extracting information from the objects of an image. It operates jointly with digital image processing, analyzing images to obtain result similar to human sight. Put otherwise, computer vision is the process of modelling and replicating human vision using hardware resources implemented by computer program, comprising a 3D scene from 2D images in terms of the properties of the structures present in the scene. Object recognition is one of the main functions linked to computer vision and is closely related to pattern recognition. An object can be defined by its texture patterns, color, shape, size, and others, and the individual recognition of these patterns may characterize an object as a whole, that is, be defined as a class. One class of patterns is a family of patterns that share properties in common between them.

Pattern recognition by equipment involves techniques of attributing patterns to their respective classes in an automatic way and with the least possible human intervention. One example of this is the use of machine learning algorithms for classifying objects. In extracting information from an image, it is necessary to analyze said properties with the help of machine learning algorithms, estimating a pattern given a new example, based on previously acquired learning. However, machine learning is subject to limitations, because in determining to which class an object belongs, it is necessary to extract the best possible representation, and this involves careful work in the areas of engineering.

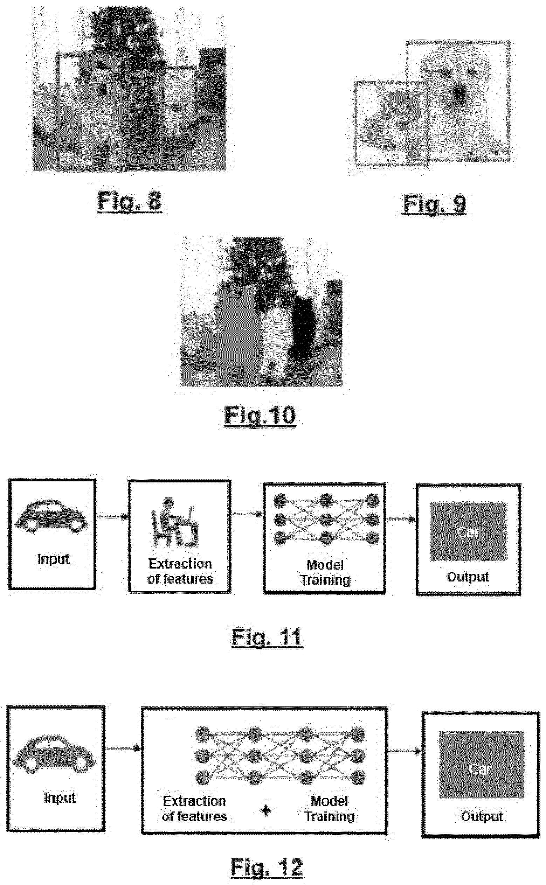

In computer vision there are techniques for detecting and segmenting objects in the image. In turn, object detection consists of locating the objects of interest present in the image and after this location, for each object a bounding box is built (consisting of a rectangular box that can be determined by the coordinates of the axes x and y in the top left-hand corner and lower right-hand corner of the rectangle) corresponding to the location of that object in the image, as represented in Figure 8. However, the bounding box merely informs that there is an element in that region, but does not provide any type of additional information such as shape, contour and identification of the object.

Recognition is a step that consists of identifying objects always after the step of detection. One of the requirements of this step is the information of the object, that is, the region of the image where the object is located that the system must analyze to carry out the process of recognition using a previously trained machine learning model. Figure 9 exemplifies the detection and identification of the objects of the image according to their respective labels (cat and dog).

Lastly, segmentation consists of creating a mask for each object present in the image, so as to partition the image into relevant segments. These masks provide more granular information about the object such as location, topography and shape. Figure 10 represents the segmentation of three different objects by means of their respective masks (in red, green and blue).

Machine Learning is a subarea of Artificial Intelligence (IA) which consists of creating models that are capable of identifying mathematical patterns generating output based on the input information. For the model to be capable of identifying a mathematical pattern, it is necessary that this system be previously trained with countless examples of data and their respective answers (labels that represent true and false values that a model must learn and predict).

In the training process, as presented in the diagram of Figure 11, based on the input information, some features will be extracted and afterwards, jointly with their labels, are subject to the model training process. At the end of the training process, the model generated will provide an output capable of identifying the label of an object.

In turn, Deep Learning is a sub area of Machine Learning. The main difference between the techniques of Machine Learning and those based on Deep Learning is the complexity of the algorithms, both on the mathematical models used and in the number of additional steps present in this model. These additional and more complex steps allows the model to be able to generalize the information, managing to extract features and details from the input data. One disadvantage of the approach that uses Deep Learning is the need for an even greater quantity of input data, as well as a variation of these data. A Machine Learning algorithm manages to converge using hundreds of input data, while Deep Learning algorithms need thousands of images to come up with significant results.

Figure 12 represents in general terms the steps present in processes that use Deep Learning, comprising input, extraction of features with model training and output.

Based on the studies disclosed in the state of the art and on the devices related to applying products on the skin, tests were carried out on the research lines that determine the process of detection and recognition of precise lip images, by using artificial intelligence according to the present invention.

The use of infrared cameras for facial recognition is a valid approach, since it is more robust to changes of lighting and does not depend on color. It is based on the presupposition that there is a difference in volume between the lips and the mouth area.

Some approaches currently tested use an infrared device available, for example Leap Motion, an approach of infrared cameras using the Microsoft Kinect is also known.

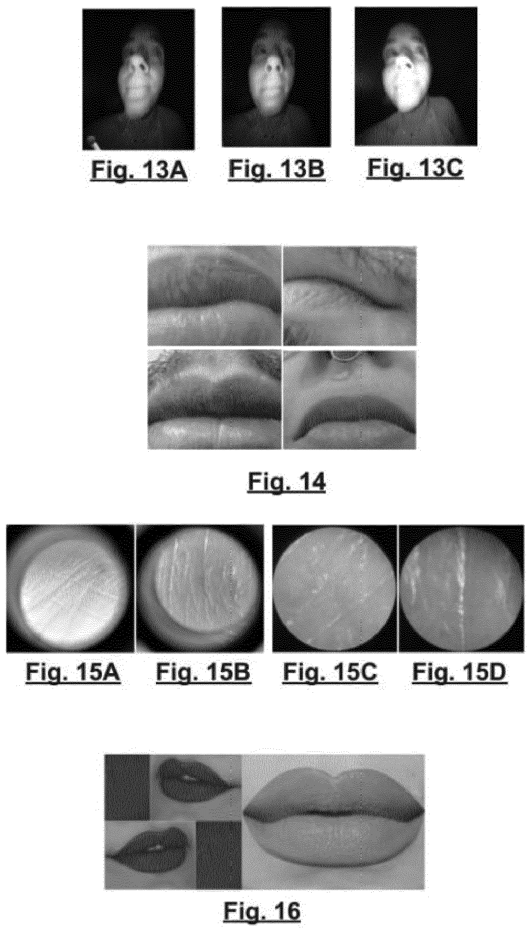

Leap Motion is a device consisting of an infrared sensor developed and fine-tuned to capture and identify hand movements, enabling man-machine interaction through gestures. Consequently, when the equipment detects a hand, the brightness of the infrared light is adjusted and the lips can be clearly visualized, as seen in Figure 13A. In comparison, in a situation in which the equipment is unable to detect a hand, the brightness of the infrared light is kept at maximum brightness and this also makes it hard to identify the lips, as can be seen in Figure 13B and in Figure 13C.

The fact that the lips can be visualized in an infrared image spurs the consideration that the approach may assist lip detection, in addition to a possible definition of the edge of the lips.

There are different approaches for detecting and segmenting the lips in RGB images. These approaches can be based on: texture patterns (since the texture of the mouth differs from the texture around it); predicting Key Points that represent the main features of the contour of the lips; use of pattern recognition, where a model is trained to identify and segment the part of interest of the image; segmentation by color, since there is a difference in tone between the skin of the lips and the surrounding area. In using key points to represent the main points/features of the face, some points are not precise in relation to the edges of the lips, however, this is something that can be adjusted with the aim of obtaining greater precision and also offset by using other techniques.

High resolution images are images with a high quantity of pixels, that is, they enable minimum details of the images to be seen, without loss of quality even with increased zoom level of the image. These images enable more precise visualization of features of the skin and mucous, such as: expression lines, fingerprints and relief.

Today, the acquisition of high resolution images is increasingly common, since cameras capable of acquiring this type of image are becoming popular and can be found on cellphones, webcams and photographic cameras.

The Logitech C920 camera is one example of a webcam that can capture images in full HD. One of the advantages of this camera is the quantity of settings via software available such as: focus, brightness, night mode, and others. Figure 14 shows some images captured with this camera model, modified to have the smallest possible focus setting (about 2 cm of the lens).

The use of simple microscopy images (Figures 15A to 15D) enables features of the skin and lip mucous to be viewed with greater precision, such as expression lines, fingerprints and tubercles. To capture images with high resolution, the use of a lens is required that allows the desired approximation relative to the object to be captured by a camera (RGB capture or otherwise). Figures 15A, 15B, 15C and 15D show examples of high resolution images captured using a special lens. Figure 15A refers to a photo of the skin around the lips and Figure 15B an image of the lip region. Both images are magnified 60 times. In turn, Figure 15C and 15D are, respectively, photographs of the skin around the lips and of the lip, both magnified 100 times.

When using lip products, users can normally define the limit of the product as being just the area of the lips or extending to the surrounding skin region. A good definition of the curves and of the outline of the pigment on the skin seems to be more important for the users than placing the product solely in the lip area, as seen in Figure 16, which shows high definition images of the curves of the lip outline when applying lipstick.

In developing the present invention, certain prior considerations are taken with greater depth and detail. Other approaches are set forth in a more in-depth manner. To deepen these approaches, detailed tests and elaborate concept experiments are carried out to evaluate the feasibility of the approach.

The approach using images in infrared referred to previously consists of capturing images in a non-visible light frequency (infrared). The benefits of this approach mainly involve the non-interference of visible light, thus making it easier to identify an object in the dark or under direct light.

As mentioned previously, the Leap Motion device was developed to track the hands and identify gestures, using infrared sensors. This equipment performs well in tracking the hands, but some limitations in its built-in computer program do not provide for the use thereof as a device to capture infrared images. These limitations include access to the images captured, control of brightness of the infrared LEDs and language compatibility and operating system.

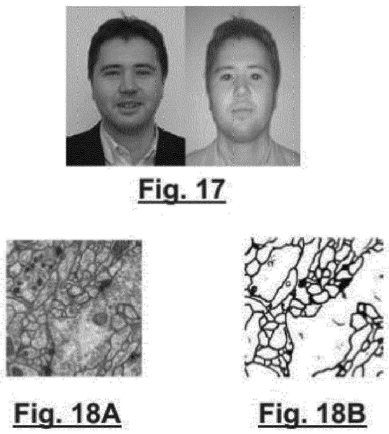

To determine the process of the present invention infrared image bases are considered, including bases with images of the face at different distances and in different positions, and bases with videos in infrared and night vision, at least one base being chosen for the tests of the algorithms and application validation. From among the bases found for testing and results presented ahead, one base is chosen, for example, SCface -Surveillance Cameras Face Database, this base comprising images of the face at varied angles and captured by different cameras, one RGB and the other infrared. One example of images from this base is presented in Figure 17.

Pattern recognition in infrared images can be performed by using various approaches (models and techniques) that can be applied separately or jointly. From among these approaches, a contour prediction model was selected, such as U-Net, disclosed by publication by Long, J. *et al* (Long, J., Shelhamer, E., Darrell, T. (2014). "Fully convolutional networks for semantic segmentation. In Computer Vision and Pattern Recognition). The U-Net and a convolutional network (CNN) developed for the segmentation of biomedical images and is mainly used for the segmentation of cells on microscope slides, allowing for example cells to be counted. This network is called fully convolutional and its architecture is represented in a U-shape.

Consequently the network receives as input during the training process the original image in grayscale and a mask, during the course of processing of the network it will make the encoder and the decoder of the images, whereby generating the predicted mask and at the end of the training a mathematical model capable of predicting masks from the object used in the training. In contrast, during the test and use of the model generated, just the original image in grayscale is used as input, and the output of the model is a segmentation mask. Figures 18A and 18B show an original result from this network, and the image 18A represents an input image for predicting and the image 18B shows the segmentation contours predicted by the network.

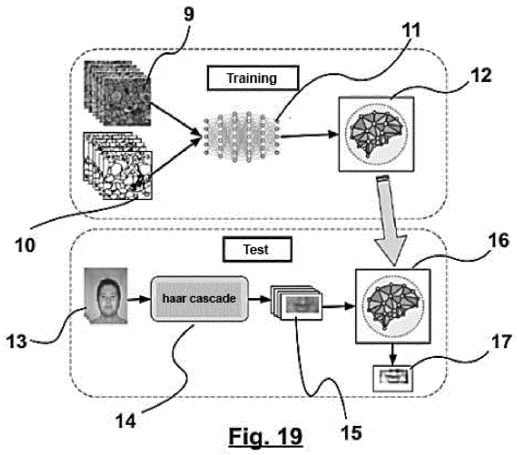

Although the U-Net is a network focused on biomedical images, its capacity to identify image details for use in segmentation enables this network to be used in other areas. In the context of the present invention, it is considered that this network interprets the distance information contained in the images in infrared. To make this test, the steps adopted are presented in the diagram of Figure 19, where the dataset of biomedical images (9) and their respective masks (10), containing 30 images, are used for training the network (11) whereby generating a mask prediction model (12).

Once the network has been trained and a predictive model created, a haar cascade algorithm (14) is used for cutting out the areas of interest from the image base in infrared (13), thus obtaining a new base (15) containing, for example 30 images for testing, these images being passed on to the model (16) that predicts the masks (17).

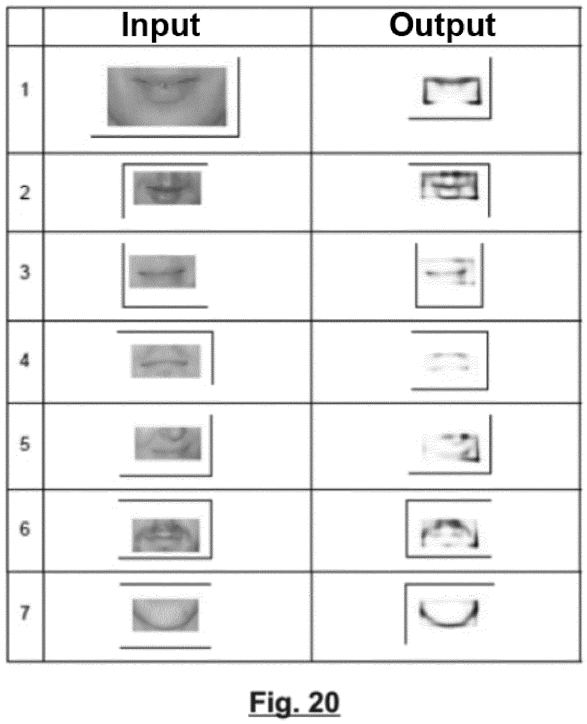

Figure 20 shows some mask results predicted by the U-Net following the process and the remarks presented previously, the first column being input images for the network (described in the diagram by the step (15)) and in the second column the output of the network (described in the diagram by step (17)).

By observing the results, it can be concluded that the network manages to describe a valid mask for some of the input images. It can be noted that in images 2, 3, 6 and 7 the contours are highlighted, and in image 6 there is a predominance of the beard in the mask and in image 7, which does not contain the mouth but just the chin of the user, the network managed to perfectly delineate the contour of the face. In contrast, in images 1, 4 and 5 the network is unable to generate a mask.

The use of color RGB images for detecting and segmenting objects is a methodology having diverse algorithms, mathematical models and improvement techniques developed with this focus. In this sense, a selection of techniques is presented, in addition to the procedures of each one and their results for the segmentation of mouth and lips.

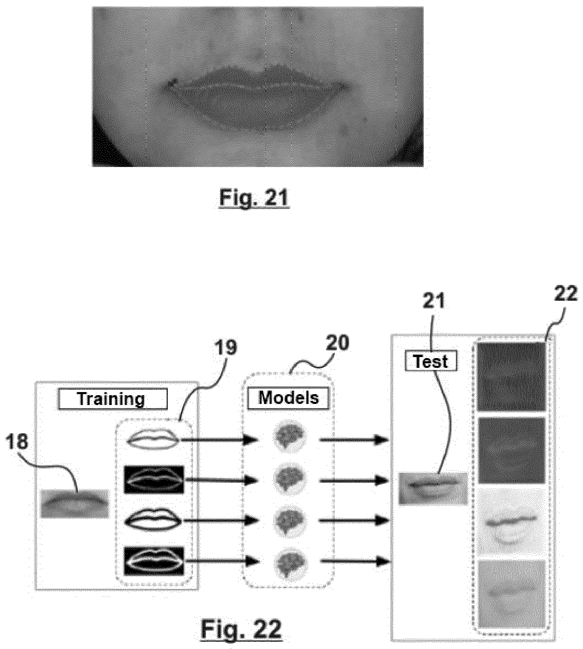

Initially, even before carrying out the training of any segmentation technique using pattern recognition, it is necessary to label the images from the training base, for example, as shown in Figure 21. The purpose of this process is, along general lines, to "show" the pattern recognition algorithms what the lip is and this is what it must "learn" in order to perform segmentation.

The U-Net network described previously for pattern recognition in images in infrared can also be used for RGB images. Accordingly, there are two initial approaches. The first concerns a modification in the architecture of the network, enabling it to recognize images with three channels (RGB). The second consists of converting the input image into a grayscale image. The approach chosen is that of converting the image into grayscale, so it is possible to obtain the test results more quickly.

Using the dataset of marked images presented previously on the marking of the images (ground truth) the tests carried out with the U-Net follow the following sequence of steps:
- conversion of the images from RGB into grayscale;
- conversion of the markings into segmentation masks;
- training the network and creating the model, and
- testing the model.

Since the U-Net is sensitive to the input mask during training, different forms of creating masks are tested, and for each test, the sequence described above repeated. Figure 22 below shows this process, step (18) being the image in grayscale, step (19) examples of different versions of mask created, step (20) the models generated for each mask, step (21) the input image for the model to predict the mask and step (22) the different answers of each model for each mask.

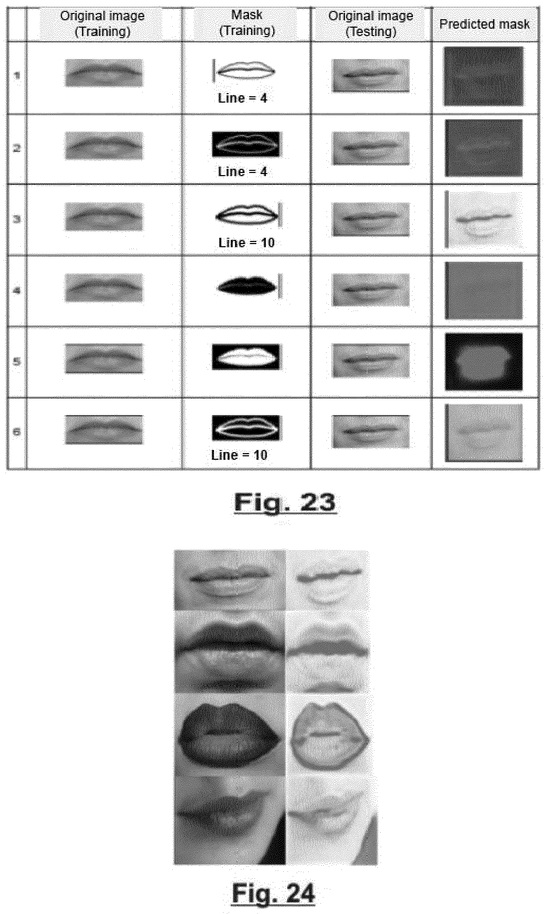

Therefore, a different model is obtained for each mask and so a different mask prediction, the masks are varied in relation to thickness of the marking line, inversion of the area of interest (represented in the masks by the black region) and by area of interest. Examples of these different tests can be seen in Figure 23 of results.

As can be seen from the results table, the mask that enables a best convergence of the model, and thus a better mask prediction, was the lip edge mask with the thicker contour line (line = 10) presented in lines 3 and 6 of Figure 23 of results.

Figure 24 shows other results for this model, the images on the left being the originals in grayscale and the images on the right the prediction made by the model.

It can be noted from the results of Figure 24 that even the network not working with color images, that is, without color information, it manages to measure the contour of the mouth with a certain accuracy. Having identified that the information on color is highly relevant for delimiting the lips, jointly with the information on texture used by this network, the modification of the network to use the information on colors of the RGB images, jointly with a larger dataset, according to the present invention, enables the network to achieve a better result, allowing its result to be used by other networks or techniques for delimiting contours.

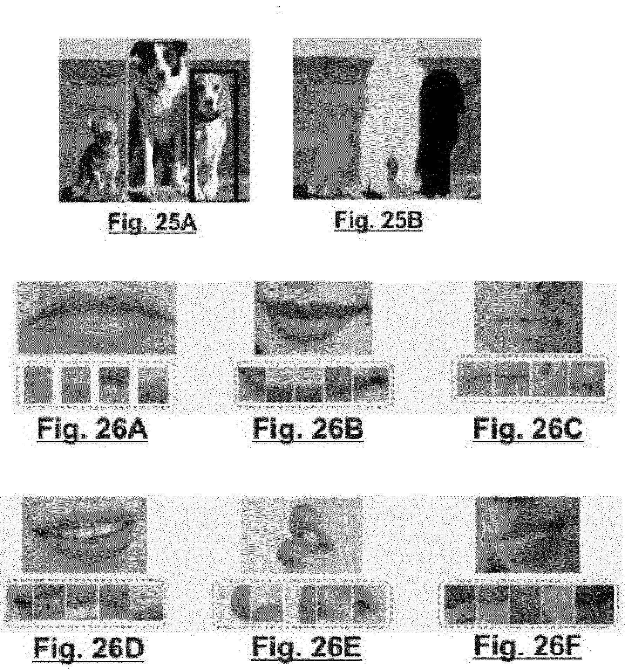

As already mentioned previously on detection, segmentation and recognition of objects in digital images, there are differences between the process of detecting objects in an image and segmenting objects in an image. The process of detecting objects in an image consists of providing the coordinates of the Bounding Boxes (colored rectangles of Figure 25A) that are drawn around each object present in the image. These coordinates are used to signal the location of each object in the image. However, this process of detecting objects does not provide any additional information besides the location of the objects. On the other hand, the process of segmenting objects in an image, initially performs the detection process for locating the objects in the image so as to then segment the objects. In the segmentation step, a mask is created (Figure 25B) for each object, which provides not only the location of the objects in the image, but also information on contour, shape and also makes it possible to separate the objects of the image as a whole, enabling the objects to be processed in isolation.

For the context of the process of the present invention, it is initially necessary to identify the lips and separate them from the rest of the facial skin. Since this is a process of outlining the lips with steps that enable detection and segmentation of the lip region with a view to determining and supporting an intelligent system of applying lip products on the lips with high precision, it is not enough simply to detect the mouth, but it is necessary to have information of the shape and contour of the mouth, as this will be one of the determining factors for the precise application of the labial product, such as lipstick.

Since these are alternatives in modes of execution, the technique of recognizing patterns stands out among the techniques of detecting objects. The technique of detecting R-CNN Faster objects, proposed in document Ren, S., He *et al* (Ren, S., He, K., Girshick, R., & Sun, J. (2015). Faster r-cnn: Towards real-time object detection with region proposal networks. In Advances in neural information processing systems (pages 91-99) provides good results in detecting the most varied objects.

In the sense of not just detecting the lips, but also the need to segment them, the R-CNN Mask architecture is quite a technique of reference that is used in the area of Pattern Recognition regarding the segmentation of objects. The R-CNN Mask is a method of segmenting objects that consists of an extension of the technique addressed in R-CNN Faster. At the outset, the R-CNN Mask has to detect the objects present in the image so as to then segment said objects. Then, in a first moment, the architecture of the network of the R-CNN Faster is used to detect the objects providing the coordinates and, consequently, the location of each object in the image, and after this with the information from the detection, in parallel, the objects are segmented through the creation of masks.

Both the R-CNN Faster and the R-CNN Mask are approaches used to perform detection and segmentation, respectively, of the most varied objects. Some adjustments and adaptation are made to the R-CNN Mask to satisfy the context of the present invention.

Said adjustments and adaptations consist of training and testing the algorithms of the R-CNN Mask with images of the lips or parts of the lips, as seen in Figures 26A to 26F, and not of various objects found on a day-to-day basis as the algorithm is usually trained and tested by pattern.

Some tests are carried out using an R-CNN Mask with the objective of checking the feasibility of using this technique for separating the lip region of the remainder of the facial skin and just how accurate the segmentation performed by this approach is.

The aim of the preliminary tests shown below is to train the R-CNN Mask algorithm with a training image base of the lips or part of the lips. After the training, a Segmentation Model will be generated, which will be used for segmenting the lip region of the test images containing the lip region or part of the lips.

With the process of labelling the images from the training base concluded, the tests are carried out. Three scenarios for the tests are established and are described below, considering the use of images of the full mouth and parts of the mouth from the training base.

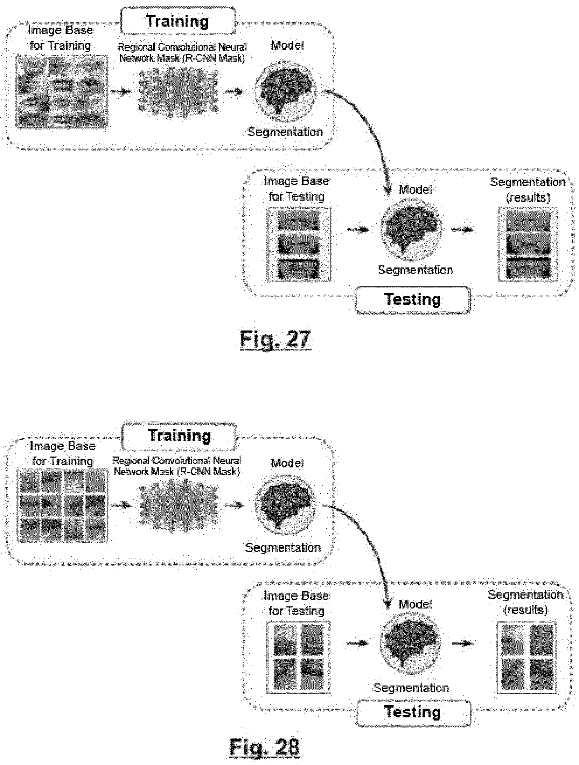

In a first scenario, as seen in the diagram of Figure 27, the main objective is to appraise the feasibility of using the R-CNN Mask to segment the lip region and how accurate the segmentation performed by the technique is, since it is used to segment various objects present in the day-to-day routine and in the case of the present invention, there is a specific type of segmentation that must be carried out and accurately so, the lips. In this first scenario the following parameters are considered:
a) training image base:
   - number of images: 110 images
   - context of the images: full mouth and without lipstick
b) image test base:
   - number of images: 94 images
   - context of the images: full mouth and without lipstick

In a second scenario, as seen in the diagram of Figure 28, the objective is to evaluate the segmentation model's capacity to learn how to differentiate labial skin from facial skin without having the complete context of the mouth, since there is the possibility that it is necessary for the final device to be very close to the lips not having the full context of the mouth when acquiring the images at the time of applying the lipstick. This learning occurs for the most part due to the structural and textural features of the skin of the lips. The following parameters are considered in this second scenario:
a) training image base:
   - number of images: 120 images
   - context of the images: part of the lips and without lipstick
b) image test base
   - number of images: 92 images
   - context of the images: part of the lips

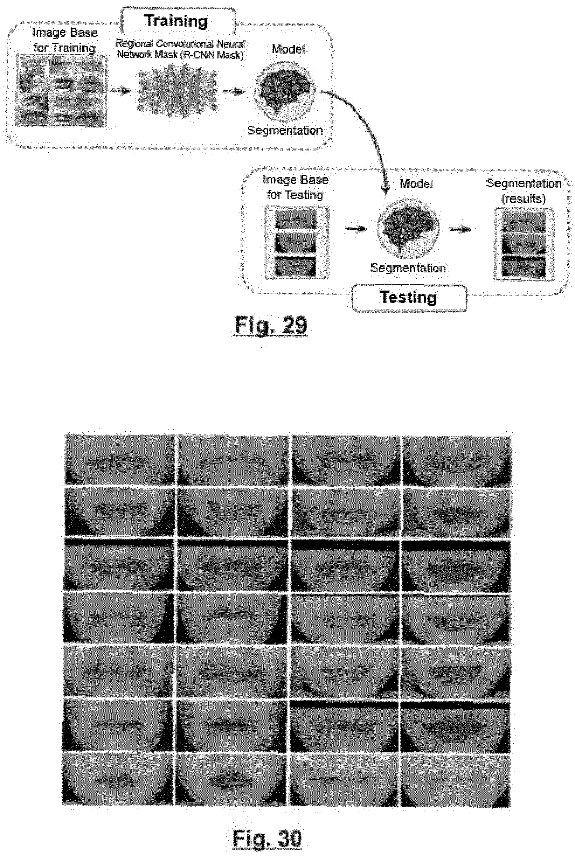

In a third scenario, as seen in the diagram of Figure 29, the main objective is to evaluate the segmentation model's capacity to generalize. The training of the algorithm is carried out using an image base with parts of the lips and the test is performed using images containing a full mouth. An evaluation is made of the capacity of the segmentation model to have been trained with parts of the lips and be able to generalize the segmentation for the full mouth and not just for parts of the lips. Training the algorithm with just parts of the lips, despite not having the full context of the mouth, favors greater extraction of the structural features of the lips due to the zoom which is given at the moment of acquiring the image. The following parameters are considered in this third scenario:
a) training image base:
   - number of images: 120 images
   - context of the images: part of the lips and without lipstick
b) image test base:
   - number of images: 94 images
   - context of the images: full mouth

Below are the results originating from the training and testing cited in the scenarios above.

In the first scenario, in which the algorithm was trained with images of the full mouth and tested with images of the full mouth too, the accuracy obtained was 70%, that is, the lip region was correctly segmented in 70% of the test images. This shows the feasibility of using the R-CNN Mask as part of the solution of the present invention. As seen in Figure 30, some of the results considered satisfactory in the evaluation by a specialist are presented from the process of segmenting the lips.

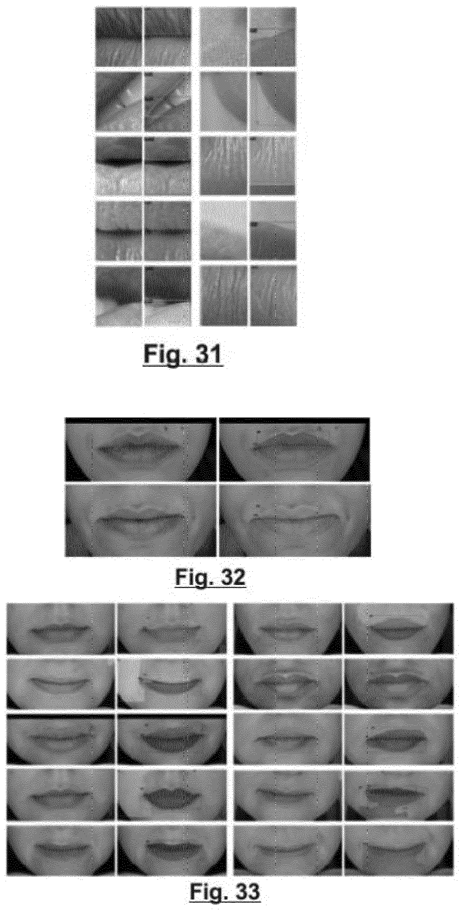

In the second scenario, in which the algorithm is trained with images of parts of the lips and tested with images of parts of the lips too, the accuracy obtained was 47%, that is, the lip region was correctly segmented in 47% of the test images. The objective of this test is to check whether the segmentation model would be able to correctly segment the regions corresponding to the lips without having the context of the full mouth in the image, since the final device may require a very close distance to the lips for acquiring the images and not obtaining the full context of the mouth. These results show that although the accuracy was lower, compared to the accuracy obtained in the first scenario, the model was able to segment the regions relating to the lips in images without the full mouth context. As seen in Figure 31, some of the results considered satisfactory in the evaluation of a specialist are presented from the process of segmenting the lips.

In the third scenario, in which the algorithm was trained with images of parts of the lips and tested with images of the full mouth, the accuracy obtained is 3%, that is, the lip region was correctly segmented in 3% of the test images. The objective of this test is to check the segmentation model's capacity to generalize the segmentation of the lips. It is expected that the accuracy of the segmentation model will fall, given that the algorithm was trained with images of parts of the lips and in the test was forced to segment the lip region with images containing the context of the full mouth, which were not presented to the algorithm during the training. The segmentation model was forced to leave a learning with images with "micro" representations (lesser context) of the lips to perform the segmentation of the lips in images with a "macro" (greater context) representation of the lips. As seen in Figure 32 and in Figure 33, some results (satisfactory and unsatisfactory, respectively) are presented from the process of segmenting the lips.

The superpixel technique consists of grouping the pixels of an image based on the similarity of the color feature. The method uses conventional image processing techniques without the need for deep learning, as is performed in the approaches presented previously (deep learning). The concept used for grouping the pixels is the clusterization algorithm k-means, which groups elements in a given space of similar features, the base calculation being the Euclidian distance between two points. The technique of clusterization is used in machine learning for cases where the learning is non-supervised, that is, cases in which the objects do not have predefined classes. The grouping of the objects in the space means the determination of the learning is point out by the group to which it belongs.

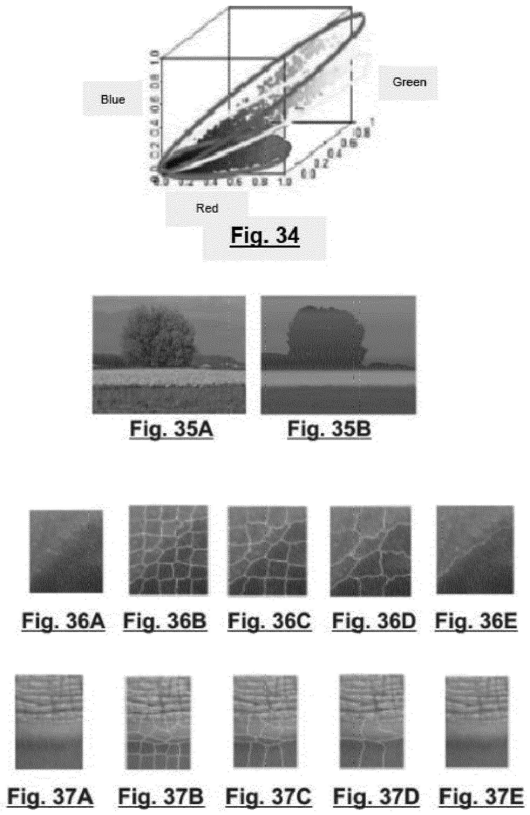

To illustrate this behavior better, Figure 34 illustrates a color space of an image digital (RGB) and the grouping carried out. It can be perceived that the distribution of the colors of the pixels of an image has a pattern that may come to represent objects in the image.

Said fact may also be noted in the digital image itself, in which the superpixel method makes it possible to differentiate the objects it has. For example, the image of Figure 35A is a real image, and the image of Figure 35B is a clusterized image. The elements that make up the image are segmented in the sense that the areas of very similar colors are considered objects of a same class, one example is the objects related to the trees and foliage in the background that were classified as green zone in the image. This fact serves for the other elements as region of the field of roses and the sky.

For analyzing the segmentation of the elements in the images that refer to skin of the face and skin of the mouth, a SLIC algorithm is used, as proposed by Achanta, R. *et al* (Achanta, R., Shaji, A., Smith, K., Lucchi, A., Fua, P., & Süsstrunk, S. (2010). SLIC superpixels (No. REP_WORK)), which carries out clusterization (groupings) by the k-means method. The main parameters for the SLIC function are the number of segments, that is, the number of clusters intended for separating the elements and the image to be processed. In this context, the algorithm was applied to the images cut out from the dataset of lips, as seen in Figures 36A to 36E (lip edge without pigment), 37A to 37E (lip edge with pigment), and 38A to 38E (lip edge without pigment), the number of segments used was 30, 20, 10 and 2 (this value was considered to check whether the algorithm delimits the lip zone and the skin zone).

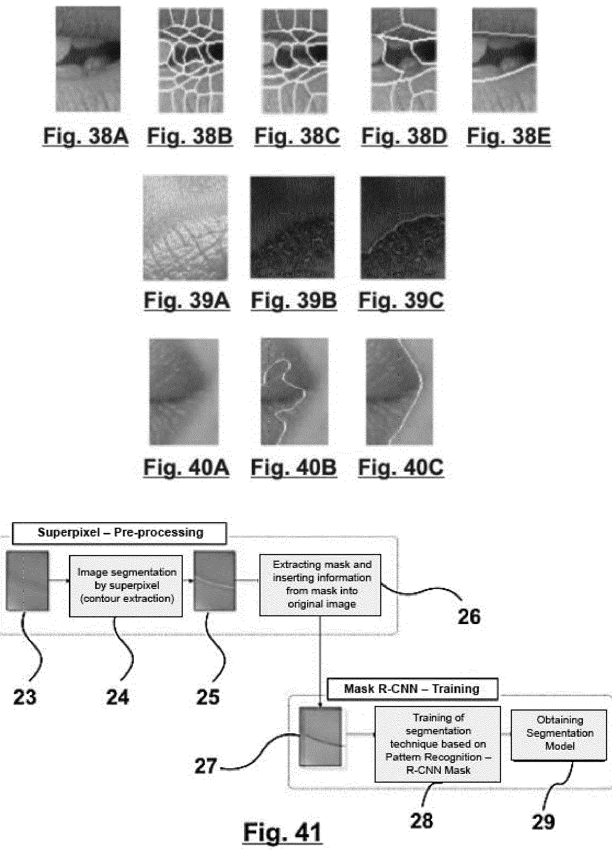

In order to obtain a better result for lip segmentation with the number of segments defined as 2, some transformations relating to the color space are made, such as change of hue, saturation and value (HSV space - Hue, Saturation, Value), in order to render the elements of the image perceptible to the superpixel algorithm, in which there were no successful separations. Said behavior is presented in the images of Figures 39A to 39C, which show superpixel zoning images applied on the lip edge without pigment in the HSV color space. Figure 39A represents a real image, 39B represents an image in HSV and Figure 39C represents an image in HSV with superpixel of 2 segments.

It is important to note that in the HSV color space there is an improvement in the separation due to the contrast that the saturation provided to the new image because of the lighting falling on the lip, however in some cases the RGB color space shows better performance, as seen in Figures 40A to 40C. Figure 40A represents a real image, 40B represents a real image with a HSV processing mask and Figure 40C represents a real image with the RGB processing mask.

With a view to improving the accuracy of lip segmentation, the present invention combines the two approaches, tested separately beforehand: the Superpixel and the R-CNN Mask.

The objective of the unprecedented combination of the Superpixel and R-CNN Mask methods according to the present invention is to use the information on separation between the lips and facial skin resulting by executing the Superpixel approach in the training of the R-CNN Mask approach algorithm. This information on superpixel separation is inserted into the images used in the training of the R-CNN Mask according to the execution flow presented in Figure 41.

This flow is executed in all the images of parts of the lips of the training base and all these images are used in the lower execution flow (R-CNN Mask - Training) for training the algorithm. The images of parts of the lips from the training base were used instead of the images of the full mouth because they are more challenging in nature for the segmentation model, as they do not have the context of the full mouth and have a lesser quantity of features to be learned by the algorithm compared to full mouth images.

In Figure 41, in a first pre-processing step using Superpixel, an original input image (23) from the execution flow is subjected to the step of approaching segmentation of the image by Superpixel with the extraction of contours (24) resulting in the image with the separation between lip and facial skin (25). Further in this first pre-processing step by superpixel is the step of extracting the mask (26) relating to the image with the separation between lip and facial skin (25) and the information from this mask is inserted into the original image (23).

Further in the step of extracting the mask (26), to insert the mask information into the input image, first the color space of the original image (23) is converted from RGB into HSV.

Next, the mask information is inserted into the luminance V channel with the objective of highlighting this separation between lip and facial skin in the final image RGB. After inserting the mask information into the luminance V channel, the image in the HSV color space is converted to the RGB color space, resulting in the resulting image (27) to be inserted into the training process using the R-CNN Mask algorithm. With the training image base of part of the lips resulting from the pre-processing step using Superpixel, the training step using the R-CNN Mask algorithm continues with the step of executing the training of the segmentation technique based on R-CNN Mask (28) pattern recognition and lastly the segmentation model (29) is obtained.

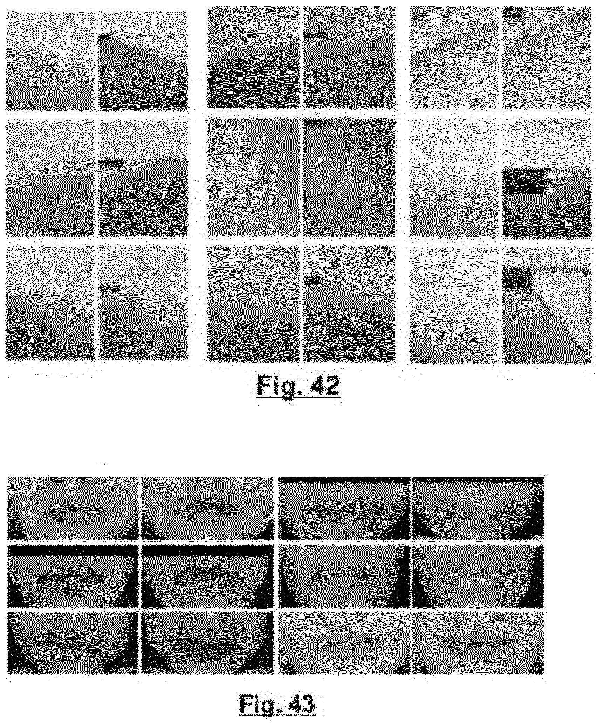

For the tests carried out following this strategy, there are two scenarios, and in a first scenario, the main objective is check whether any significant improvement is obtained using images of parts of the lips both in the training base as in the testing base. The accuracy obtained was 23%, that is, the lip region was correctly segmented in 23% of the test images, as presented in the images of Figure 42.

In a second scenario, the main objective is to check the capacity of the segmentation model to generalize the knowledge obtained based on a training image base of parts of the lips for testing images with the context of the full mouth. The accuracy obtained was 7%, that is, the lip region was correctly segmented in 7% of the test images, as presented in the images of Figure 43.

The various steps of the processing methods now presented are carried out by means of a processing module present in a lip product application system. In this processing module, all the processing necessary is performed in order to identify the lip edges, after capturing the information. The step of predicting the model is the moment in which the processing module defines the lip regions that should receive the pigment by the lip product application system. These lip regions defined by the model undergo a necessary post-processing step in order to guarantee the right format of the information that is compatible with the lip product application system. Next, the application system uses the pigment and applies it to the lip region identified previously.

## Claims

1. A method for detecting and segmenting the lip region, comprising the steps of:
- recognizing patterns by extracting input features from lip images, labelling them for a training base by means of a processing module present in a lip product application system;
- defining and indicating the labelled lip images with algorithms for recognizing patterns for said lip images to be learnt and segmented by said processing module; and
- training a machine learning model in said processing module with a plurality of exemplified data and their respective answers defining labels that the model should learn and predict to identify and generate a mathematical pattern for a lip product application system, wherein
the step of recognizing patterns by extracting input features from lip images comprises
recognizing patterns in infrared images, using a contour prediction model by a convolutional network (CNN) U-Net; and
the step of training a machine learning model in said processing module comprises
carrying out the encoding and decoding of original lip images received in grayscale and a mask as input in the convolutional network (CNN) U-Net during the training process, generating a predicted mask, and at the end of the training generating a mathematical mask prediction model from the lip images used in the training;
training an R-CNN Mask algorithm with a training image base of the lips or part of the lips in order to learn how to differentiate labial skin from facial skin;
generating a segmentation model of the region of the images containing the lip region or part of the lips;
grouping the pixels of an image based on the similarity of the color feature by means of a clusterization algorithm that groups elements in a given space of similar features such that determining the learning is pointed out by the group to which it belongs;
generating a segmentation model of the region of the images containing the lip region or part of the lips used a SLIC algorithm that performs the clusterization with the k-means method using segment number parameters, the algorithm being applied to the images cut out from the image database containing the lip region or part of the lips; and
changing the hue, saturation and value in the HSV color space, or the RGB color space, so as to render the elements of the image perceptible to the superpixel algorithm.

2. The method for detecting and segmenting the lip region according to claim 1, **characterized by**:
- submitting, in a pre-processing step, an original input lip image to the step of segmentation of the image by superpixel with the extraction of contours resulting in the image with the separation between lip and facial skin;
- extracting a mask relating to the image with the separation between lip and facial skin, inserting the information from this mask in the original image, and converting the color space of the original input image from RGB to HSV;
- inserting the mask information in the luminance V channel so as to highlight the separation between lip and facial skin in the final RGB image;
- converting the image in the HSV color space to the RGB color space, obtaining a resulting image;
- inserting the resulting image in the training process using the R-CNN Mask algorithm; and
- carrying out the segmentation training using the R-CNN Mask algorithm with the training base image of part of the lips resulting from the pre-processing step; and
- generating a segmentation model.

## Patentansprüche

1. Verfahren zum Erfassen und Segmentieren des Lippenbereichs, das die folgenden Schritte umfasst:
- Erkennen von Mustern durch Extrahieren von Eingabemerkmalen aus Lippenbildern, Kennzeichnen dieser für eine Trainingsbasis mittels eines Verarbeitungsmoduls, das in einem Lippenproduktanwendungssystem vorhanden ist;
- Definieren und Anzeigen der gekennzeichneten Lippenbilder mit Algorithmen zum Erkennen von Mustern für die Lippenbilder, die durch das Verarbeitungsmodul gelernt und segmentiert werden sollen; und
- Trainieren eines Maschinenlernmodells in dem Verarbeitungsmodul mit einer Vielzahl von beispielhaften Daten und ihren jeweiligen Antworten, die Kennzeichnungen definieren, die das Modell lernen und vorhersagen sollte, um ein mathematisches Muster für ein Lippenproduktanwendungssystem zu identifizieren und zu erzeugen, wobei
der Schritt des Erkennens von Mustern durch Extrahieren von Eingabemerkmalen aus Lippenbildern Folgendes umfasst: Erkennen von Mustern in Infrarotbildern unter Verwendung eines Konturvorhersagemodells durch ein U-Netz eines Convolutional Network (CNN); und
der Schritt des Trainierens eines Maschinenlernmodells in dem Verarbeitungsmodul Folgendes umfasst: Durchführen des Codierens und Decodierens von ursprünglichen Lippenbildern, die in Graustufen empfangen werden, und einer Maske als Eingabe in das U-Netz des Convolutional Network (CNN) während des Trainingsprozesses, Erzeugen einer vorhergesagten Maske und am Ende des Trainierens Erzeugen eines mathematischen Maskenvorhersagemodells aus den Lippenbildern, die beim Training verwendet werden;
Trainieren eines R-CNN-Maskenalgorithmus mit einer Trainingsbildbasis der Lippen oder eines Teils der Lippen, um zu lernen, wie Labialhaut von Gesichtshaut zu unterscheiden ist;
Erzeugen eines Segmentierungsmodells des Bereichs der Bilder, der den Lippenbereich oder einen Teil der Lippen enthält;
Gruppieren der Pixel eines Bildes basierend auf der Ähnlichkeit des Farbmerkmals mittels eines Clusterisierungsalgorithmus, der Elemente in einem gegebenen Raum ähnlicher Merkmale gruppiert, so dass das Bestimmen des Lernens durch die Gruppe, zu der er gehört, hervorgehoben wird;
Erzeugen eines Segmentierungsmodells des Bereichs der Bilder, der den Lippenbereich oder einen Teil der Lippen enthält, unter Verwendung eines SLIC-Algorithmus, der die Clusterisierung mit dem k-Means-Verfahren unter Verwendung von Segmentzahlparametern durchführt, wobei der Algorithmus auf die Bilder angewendet wird, die aus der Bilddatenbank ausgeschnitten werden, die den Lippenbereich oder einen Teil der Lippen enthält; und
Ändern des Farbtons, der Sättigung und des Werts im HSV-Farbraum oder im RGB-Farbraum, um die Elemente des Bildes für den Superpixel-Algorithmus wahrnehmbar zu machen.

2. Verfahren zum Erfassen und Segmentieren des Lippenbereichs nach Anspruch 1, **gekennzeichnet durch**:
- Unterziehen, in einem Vorverarbeitungsschritt, eines ursprünglichen Eingabelippenbildes dem Schritt der Segmentierung des Bildes durch Superpixel mit der Extraktion von Konturen, die zu dem Bild mit der Trennung zwischen Lippen- und Gesichtshaut führen;
- Extrahieren einer Maske, die sich auf das Bild mit der Trennung zwischen Lippen- und Gesichtshaut bezieht, Einfügen der Informationen aus dieser Maske in das ursprüngliche Bild und Umwandeln des Farbraums des ursprünglichen Eingabebildes von RGB in HSV;
- Einfügen der Maskeninformationen in den Luminanz-V-Kanal, um die Trennung zwischen Lippen- und Gesichtshaut im endgültigen RGB-Bild hervorzuheben;
- Umwandeln des Bildes vom HSV-Farbraum in den RGB-Farbraum, Erhalten eines resultierenden Bildes;
- Einfügen des resultierenden Bildes in den Trainingsprozess unter Verwendung des R-CNN-Maskenalgorithmus; und
- Durchführen des Segmentierungstrainings unter Verwendung des R-CNN-Maskenalgorithmus mit dem Trainingsbasisbild eines Teils der Lippen, das aus dem Vorverarbeitungsschritt resultiert; und
- Erzeugen eines Segmentierungsmodells.

## Revendications

1. Procédé de détection et de segmentation de la région labiale, comprenant les étapes consistant à :
- reconnaître des formes en extrayant des caractéristiques d'entrée à partir d'images labiales, en les étiquetant pour une base d'entraînement au moyen d'un module de traitement présent dans un système d'application de produits labiaux ;
- définir et indiquer les images labiales étiquetées avec des algorithmes de reconnaissance de formes pour l'apprentissage et la segmentation desdites images labiales par ledit module de traitement ; et
- entraîner un modèle d'apprentissage automatique dans ledit module de traitement avec une pluralité de données d'exemple et leurs réponses respectives définissant les étiquettes que le modèle doit apprendre et prédire pour identifier et générer un modèle mathématique pour un système d'application de produits labiaux, dans lequel
l'étape de reconnaissance de formes en extrayant des caractéristiques d'entrée à partir des images labiales comprend
la reconnaissance de formes dans des images infrarouges, à l'aide d'un modèle de prédiction de contours par un réseau convolutif (CNN) U-Net ; et
l'étape d'entraînement d'un modèle d'apprentissage automatique dans ledit module de traitement comprend
la réalisation de l'encodage et du décodage d'images labiales originales reçues en niveaux de gris et d'un masque comme entrée dans le réseau convolutif (CNN) U-Net pendant le processus d'entraînement, la génération d'un masque prédit et, à la fin de l'entraînement, la génération d'un modèle mathématique de prédiction de masque à partir des images labiales utilisées dans l'entraînement ;
l'entraînement d'un algorithme de masque R-CNN avec une image de base d'entraînement des lèvres ou d'une partie des lèvres afin d'apprendre à différencier la peau labiale de la peau du visage ;
la génération d'un modèle de segmentation de la région des images contenant la région labiale ou une partie des lèvres ;
le regroupement des pixels d'une image sur la base de la similarité de la caractéristique de couleur au moyen d'un algorithme de clustering qui regroupe les éléments dans un espace donné de caractéristiques similaires de sorte que la détermination de l'entraînement est indiquée par le groupe auquel il appartient ;
la génération d'un modèle de segmentation de la région des images contenant la région labiale ou une partie des lèvres en utilisant un algorithme SLIC qui effectue le clustering par la méthode des k-moyennes en utilisant des paramètres de nombre de segments, l'algorithme étant appliqué aux images extraites de la base de données d'images contenant la région labiale ou une partie des lèvres ; et
la modification de la teinte, de la saturation et de la valeur dans l'espace colorimétrique TSV ou dans l'espace colorimétrique RVB, afin de rendre les éléments de l'image perceptibles par l'algorithme de superpixels.

2. Procédé de détection et de segmentation de la région labiale selon la revendication 1, **caractérisé par** :
- la soumission, dans une étape de prétraitement, d'une image labiale d'entrée originale à l'étape de segmentation de l'image par superpixel avec l'extraction des contours résultant en l'image avec la séparation entre les lèvres et la peau du visage ;
- l'extraction d'un masque relatif à l'image avec la séparation entre les lèvres et la peau du visage, l'insertion des informations de ce masque dans l'image originale et la conversion de l'espace colorimétrique de l'image d'entrée originale de RVB à TSV ;
- l'insertion des informations de masque dans le canal de luminance V afin de mettre en évidence la séparation entre les lèvres et la peau du visage dans l'image RVB finale ;
- la conversion de l'image dans l'espace colorimétrique TSV vers l'espace colorimétrique RVB, l'obtention d'une image résultante ;
- l'insertion de l'image résultante dans le processus d'entraînement à l'aide de l'algorithme de masque R-CNN ; et
- la réalisation de l'entraînement à la segmentation à l'aide de l'algorithme de masque R-CNN avec l'image de base d'entraînement d'une partie des lèvres résultant de l'étape de prétraitement ; et
- la génération d'un modèle de segmentation.
